# FASCICULE DE BREVET EUROPEEN

(11) **EP 0 950 307 B1**
(45) Date de publication et mention de la délivrance du brevet: **26.07.2006**
(21) Numéro de dépôt: 97942088.2
(22) Date de dépôt: 25.09.1997
(51) Int. Cl.: H04M 3/38, H04M 15/00, H04M 17/00, H04M 1/274, H04L 9/32

(54) **PROCEDE ET SYSTEME POUR SECURISER LES PRESTATIONS DE SERVICE D'OPERATEURS DE TELECOMMUNICATION**
VERFAHREN UND SYSTEM ZUR ABSICHERUNG DER DIENSTLEISTUNGEN VON FERNMELDENETZBETREIBERN
METHOD AND SYSTEM FOR ENSURING THE SECURITY OF THE SUPPLY OF SERVICES OF TELECOMMUNICATION OPERATORS

(30) Priorité: 25.09.1996 FR 9611914
(43) Date de publication de la demande: 20.10.1999
(73) Titulaire: Audiosmartcard International S.A., 92100 Boulogne Billancourt (FR)
(72) Inventeur: ROSSET, Franck, F-75011 Paris (FR); GAYET, Alain, F-92400 Courbevoie (FR); MOULIN, Jean, F-92210 Draveil (FR)
(74) Mandataire: Vidon, Patrice
(86) Numéro de dépôt international: PCT/FR1997/001683
(87) Numéro de publication internationale: WO 1998/013990

(56) Documents cités:
- WO-A-82/04169
- WO-A-88/03294
- WO-A-96/04741
- WO-A-96/31971
- WO-A-97/03421
- WO-A-97/12471
- CA-A- 2 085 775
- US-A- 4 707 592
- COLFALONE D E; ROGERS B W; THORNBERRY R J JR: "Calling card service-TSPS hardware, software and signalling implementation" BELL SYSTEM TECHNICAL JOURNAL, vol. 61, no. 7,pt.3, septembre 1982, USA, pages 1675-1714, XP002034396
- BASINGER R G; BERGER M; PRELL E M; RANSOM V L; WILLIAMS J R;: "Calling Card Service -Overall Description and operational Characteristics" BELL SYSTEM TECHNICAL JOURNAL, vol. 61, no. 7, pt.3, septembre 1982, USA, pages 16655-1673, XP002034397

## Description

Le domaine de l'invention est celui des prestations de service à distance proposées par les opérateurs de télécommunication à leurs clients abonnés à leur réseau.

Plus précisément l'invention conceme un procédé et un système permettant à un opérateur de télécommunication d'identifier de manière rapide et de débiter de manière sûre les comptes des abonnés d'un réseau téléphonique.

Le problème posé est d'empêcher un utilisateur mal intentionné d'accéder au réseau de télécommunication sans y être autorisé, sans acquitter les droits correspondants ou en prétendant qu'il n'a pas demandé les services qui lui sont débités par l'opérateur de télécommunication.

Pour résoudre ce problème il a été proposé d'utiliser des clés d'accès générées par des cartes à mémoire et de modifier les combinés téléphoniques pour qu'ils puissent lire les cartes à mémoire. Ces solutions, outre leur coût, sont peu pratiques et longues à mettre en oeuvre. En fait, le problème posé ne peut être effectivement résolu que si on sait résoudre simultanément un autre problème : concevoir un procédé et un système commode d'utilisation, rapide à mettre en oeuvre et économique. En effet, dés lors que l'on s'adresse à un large public, la facilité d'utilisation et les gains de temps deviennent des problèmes majeurs qui ne peuvent pas être écartés.

Il a été proposé (document WO 96 04741 au nom de Andrew MARK) d'utiliser une carte émettant des signaux acoustiques, cryptés, de type DTMF. Ainsi, le porteur d'une telle carte, en accouplant celle-ci au microphone du combiné téléphonique transfert automatiquement aux services informatiques, ses identifiants. Pour plus de sécurité, il est aussi proposé, dans une solution coûteuse en moyens mis en oeuvre, que les signaux acoustiques soient modifiés de manière pseudo-aléatoire en fonction d'une horloge. Comme ces identifiants sont chiffrés, on peut penser qu'un tiers ne sera pas en mesure d'en comprendre le contenu. Toutefois, l'enregistrement des signaux émis par la carte couplé à l'usage d'un générateur pseudo-aléatoire correctement programmé reste possible et un fraudeur muni d'un tel enregistrement peut se substituer au bénéficiaire de la carte.

La solution de A. MARK, si elle était transposée dans le cas des opérateurs de télécommunication, afin d'identifier de manière rapide et sûre les abonnés de leurs réseaux, ne permettrait donc pas d'empêcher un utilisateur mal intentionné d'accéder, sans y être autorisé, aux services offerts par les opérateurs de télécommunication.

Les objectifs visés par la présente invention sont atteints et les problèmes que posent les techniques selon l'art antérieur sont résolus, selon l'invention, à l'aide d'un procédé comprenant les étapes suivantes :
- l'opérateur de télécommunication met à la disposition de chacun des abonnés une carte d'abonné, au format carte de crédit, personnalisée par des identifiants spécifiques pour chaque abonné et pour chaque carte d'abonné,
- la dite carte, au format carte de crédit, émet de brefs signaux acoustiques d'identification, de type DTMF, cryptés au moins en partie, variant à chaque opération, lorsqu'elle est actionnée par l'abonné,
- les signaux acoustiques d'identification sont reçus par le microphone du combiné téléphonique et sont convertis en signaux électriques, avant d'être transmis par le réseau de communication au service informatique de l'opérateur de télécommunication,
- les signaux transmis et les données d'identification du client et de la carte détenues par le service informatique sont traités et comparés électroniquement par le service informatique de l'opérateur de télécommunication.

La dite carte :
- décompte en outre le nombre de fois C(p,n) où elle est actionnée,
- émet des signaux acoustiques représentatifs du nombre de fois C(p,n) où elle a été actionnée,
- crypte les signaux acoustiques en fonction du nombre de fois C(p,n) où elle a été actionnée.

Les dits moyens informatiques pour traiter et comparer électroniquement les signaux transmis et les données d'identification du client et de la carte détenues par le service informatique de l'opérateur de télécommunication,
- mémorisent le nombre de fois C(p,m) où la carte a été actionnée lors de la dernière opération validée,
- comparent le nombre de fois C(p,n) où la carte a été actionnée, lors de l'opération en cours, avec le nombre de fois mémorisé N1,
- rejettent l'opération en cours si C(p,n) est inférieur ou égal à C(p,m) et poursuivent la vérification de l'opération en cours si C(p,n) est supérieur à C(p,m),
- recalculent les signaux électroniques S'(p,n) en fonction des données d'identification et du nombre de fois C(p,n) où la carte a été actionnée, lors de l'opération en cours, puis les comparent aux signaux électroniques S(p,n) transmis. De sorte qu'en cas de coïncidence, l'abonné peut être immédiatement mis en communication avec les services de l'opérateur de télécommunication.

Ainsi, grâce à ce procédé, l'opérateur de télécommunication peut vérifier que l'appelant dispose bien d'une carte authentique et non d'un leurre informatique. Il a pu également identifier le titulaire de la carte comme étant une personne habilitée à utiliser les services qu'il offre. De sorte qu'en cas de conformité le client est immédiatement mis en communication avec le serveur vocal ou l'opératrice de l'opérateur de télécommunication.

Par ailleurs, les fraudeurs n'ont plus la possibilité de dérober les données d'identification puisque celles-ci sont transmises automatiquement sous une forme cryptée. En outre, l'enregistrement, sous quelque forme que ce soit, des signaux acoustiques ne sera d'aucune utilité à un fraudeur pour se faire identifier par l'opérateur de télécommunication et bénéficier de ses services. En effet, les signaux acoustiques d'identification varient à chaque fois que la carte est actionnée.

Afin d'augmenter la sécurité, dans une variante de réalisation, le procédé comprend en outre l'étape suivante, l'abonné émet, au moyen d'un clavier associé au combiné téléphonique et/ou à la carte, un code confidentiel. Après transmission au service informatique de l'opérateur de télécommunication, via le réseau de communication, ce code confidentiel est traité et comparé au code confidentiel personnel de l'abonné détenu par le service informatique de l'opérateur de télécommunication.

Ainsi, l'opérateur de télécommunication peut vérifier que l'appelant est bien la personne habilitée à entrer en relation avec ses services. Une carte volée ne peut pas être utilisée par le voleur faute de connaître le code confidentiel.

Dans une autre variante de réalisation, afin également de renforcer la sécurité du procédé et d'éviter que le client ne puisse pas contester l'ordre qu'il a passé à l'opérateur de télécommunication, le procédé comprend en outre les étapes suivantes : - les ordres donnés par l'abonné à l'opérateur de télécommunication sont validés par l'abonné en actionnant la carte d'abonné pour qu'elle émette un signal acoustique crypté de validation,
- le dit signal de validation est enregistré par le service informatique de l'opérateur de télécommunication.

Avantageusement, le procédé selon l'invention pourra comporter l'étape complémentaire suivante :
- un accusé de réception du signal de validation est adressé au client.

Grâce à ce procédé, l'abonné a validé, par une signature électronique, l'ordre qu'il a donné à l'opérateur de télécommunication.

L'invention concerne également un système permettant aux abonnés d'un réseau de télécommunication, d'accéder de manière sûre et rapide, aux services que l'opérateur de télécommunication offre à ses clients. Ce système a pour caractéristique de comprendre les moyens de mise en oeuvre du procédé ci-dessus défini et de ses variantes de réalisation.

Plus particulièrement :
- Le système selon l'invention comprend une carte d'abonné, au format carte de crédit, personnalisée par des identifiants spécifiques pour chaque carte d'abonné et pour chaque abonné, mise à la disposition de ceux-ci par l'opérateur de télécommunication. La dite carte comporte des moyens d'émission de brefs signaux acoustiques d'identification, de type DTMF. Les moyens d'émission sont actionnés par l'abonné au moyen d'un élément accessible de l'extérieur de la carte d'abonné. La carte comporte en outre des moyens de cryptage permettant de crypter au moins en partie et de varier les signaux acoustiques chaque fois que la carte est actionnée.
- Le système selon l'invention comprend un combiné téléphonique comprenant un microphone destiné à recevoir et transformer les signaux acoustiques reçus, en des signaux électroniques transmissibles à distance au moyen du réseau de communication.
- Le système selon l'invention comprend des moyens informatiques, dépendants des services informatiques de l'opérateur de télécommunication, connectés au réseau de télécommunication. Les dits moyens informatiques comprennent :
   * une base de données contenant les références des cartes d'abonné et des abonnés et leurs données d'identification,
   * des moyens de traitement et des moyens de comparaison des signaux électroniques transmis et des données d'identification contenues dans la base de données.

Ainsi, grâce à ce système, l'opérateur de télécommunication peut vérifier que l'appelant dispose bien d'une carte authentique et non d'un leurre informatique. Il a pu également identifier le titulaire de la carte comme étant une personne habilitée à utiliser les services qu'il offre. De sorte qu'en cas de conformité le client est immédiatement mis en communication avec le serveur vocal ou l'opératrice de l'opérateur de télécommunication. Par ailleurs, les fraudeurs n'ont plus la possibilité de dérober les données d'identification puisque celles-ci sont transmises automatiquement sous une forme cryptée. En outre, l'enregistrement, sous quelque forme que ce soit, des signaux acoustiques ne sera d'aucune utilité à un fraudeur pour se faire identifier par les services informatiques de l'opérateur de télécommunication. En effet, les signaux acoustiques d'identifications varient à chaque opération. C'est à dire chaque fois que la carte est actionnée.

La dite carte comporte en outre :
- un compteur incrémental interconnecté aux moyens d'émission et aux moyens de cryptage s'incrémentant d'au moins une unité chaque fois que la carte est actionnée.

De sorte que l'état du compteur incrémental est émis à destination des moyens informatiques et que les signaux acoustiques sont cryptés en fonction de l'état du compteur incrémental.

Les dits moyens informatiques comportent en outre :
- des moyens de mémorisation de l'état C(p,m) du compteur incrémental lors de la dernière opération validée,
- des moyens de comparaison de l'état C(p,n) du compteur incrémental émis lors de l'opération en cours avec l'état C(p,m) du compteur incrémental mémorisé.

De sorte que la vérification de l'opération en cours est rejetée si C(p,n) est inférieur ou égal à C(p,m) et est poursuivie si C(p,n) est strictement supérieur à C(p,m).

Les dits moyens de traitement et les dits moyens de comparaison des signaux électroniques et des données d'identification contenues dans la base de données comportent des moyens permettant de recalculer les signaux électroniques en fonction de l'état C(p,n) du compteur incrémental et des données d'identification puis de les comparer aux signaux électroniques transmis. De sorte qu'en cas de coïncidence, l'abonné peut être immédiatement mis en communication avec son interlocuteur ou avec les services de l'opérateur de télécommunication.

Afin d'augmenter la sécurité du système, dans une variante de réalisation, le système comprend en outre des seconds moyens de comparaison d'un code confidentiel personnel à l'abonné contenu dans la base de données, à un code confidentiel émis par l'abonné. Ce code est émis au moyen d'un clavier associé au combiné téléphonique et/ou à la carte et transmis aux moyens informatiques de l'opérateur de télécommunication, par le réseau de communication.

Ainsi, l'opérateur de télécommunication peut vérifier que l'appelant est bien la personne habilitée à entrer en relation avec ses services. Une carte volée ne peut pas être utilisée par le voleur faute de connaître le code confidentiel.

Dans une autre variante de réalisation, afin également de renforcer la sécurité du système et d'éviter que le client ne puisse contester l'ordre qu'il a donné à l'opérateur de télécommunication, le système selon l'invention est tel que :
- la dite carte émet, lorsqu'elle est actionnée par l'abonné, un signal acoustique crypté de validation des ordres donnés par l'abonné,
- les dits moyens informatiques comprennent des moyens de détection et d'enregistrement du signal de validation.

Grâce à ce système, le client a validé, par une signature électronique, l'ordre qu'il a donné à l'opérateur de télécommunication.

Avantageusement dans ce cas les moyens informatiques comprenent en outre des moyens d'édition d'un accusé de réception des ordres donnés. Cet accusé de réception est adressé à l'abonné.

D'autres caractéristiques et avantages de l'invention apparaîtront à la lecture de la description de variantes de réalisation de l'invention, données à titre d'exemple indicatif et non limitatif, et de :
- la figure 1 présentant une vue schématique en perspective du système et du procédé selon l'invention,
- la figure 2 présentant la carte sous la forme de bloc diagramme,
- la figure 3 présentant l'algorithme de vérification de l'authenticité du signal transmis.

Le système et le procédé selon l'invention permettent au client 11 (autrernent désigné sous le nom d'abonné) d'appeler, de manière sûre et rapide, notamment d'une cabine publique 31, au moyen d'un combiné téléphonique 16 comportant un microphone 17, les services 30 que l'opérateur de télécommunication (l'opératrice) 12 met à la disposition de ses clients 11. Le combiné téléphonique 16, situé à distance des services informatiques 18 de l'opérateur de télécommunication, est connecté aux services informatiques 18 via un réseau de communication 15. Le système comprend une carte 10, au format carte de crédit, personnalisée par des identifiants spécifiques pour chaque carte et pour chaque client 11. Cette carte est mise à la disposition des abonnés de l'opérateur de télécommunication 12.

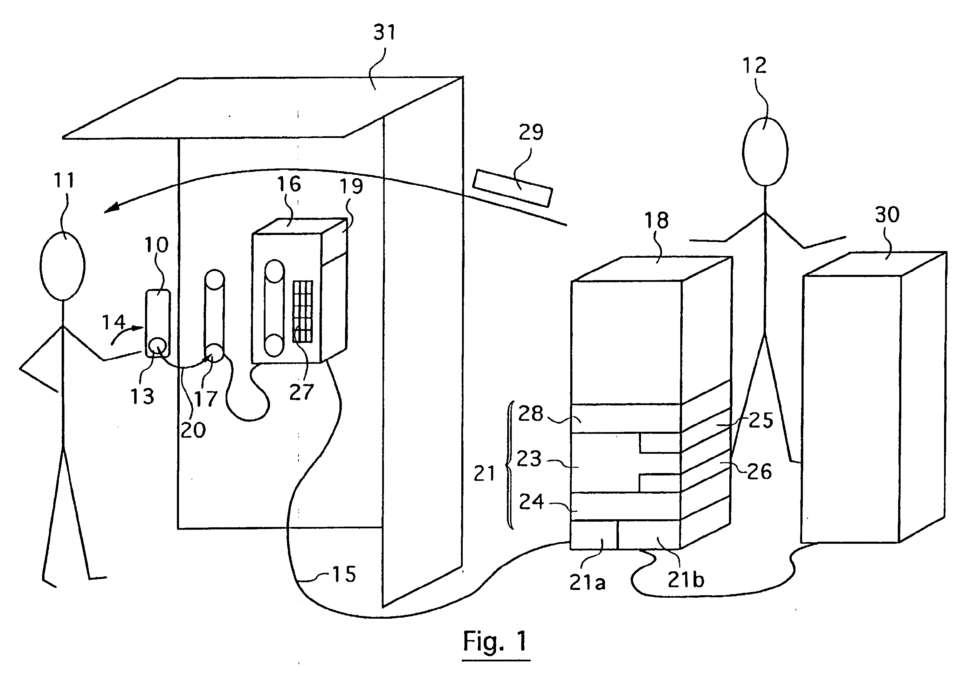

La carte 10 comporte des moyens d'émission, notamment un haut parleur 13 émettant de brefs signaux acoustiques d'identification 20, de type DTMF. Ces signaux sont émis lorsque les moyens d'émission 13 et les organes qui les contrôlent sont actionnés par le client au moyen d'un bouton 14 accessible de l'extérieur de la carte (non visible sur la figure 1 car situé sur l'autre côté de la carte). Ces moyens d'émission 13 sont excités par un générateur de signaux DTMF 99, contrôlé par un microprocesseur 104 alimenté par une pile 106 et piloté par un résonateur 107. Le microprocesseur 104 contenu dans la carte comporte des moyens de cryptage 103 permettant de crypter, au moins en partie, les signaux acoustiques 20, comportant un algorithme de cryptage 108 et des identifiants 109 spécifiques pour chaque carte 10 et pour chaque client 11, notamment la clé secrète 250 utilisée par algorithme de cryptage 108.

Les signaux acoustiques 20 sont reçus par le microphone 17 du combiné téléphonique, contre lequel le client accole la carte 10. Le système comprend également des moyens de transmission 19 des signaux acoustiques 20, situés dans le combiné téléphonique 16. Ces moyens de transmission 19 transmettent à distance les signaux acoustiques, après traitement et conversion en signaux électroniques, via le réseau de communication 15. Le système comprend également des moyens informatiques 21, dépendants des services informatiques 18 de l'opérateur de télécommunication. Ces moyens informatiques sont connectés au réseau de communication 15 et situés à distance des combinés téléphoniques 16.

Ces moyens informatiques 21 comprennent eux-mêmes :
- une base de données 23 contenant les références des cartes et des clients et leurs données d'identification,
- des moyens de traitement 24 et des moyens de comparaison 25 des signaux électroniques et des données d'identification contenues dans la base de données.

De sorte qu'en cas de conformité, les services 30 de l'opérateur de télécommunication sont immédiatement accessibles au client 11.

De préférence, le microprocesseur 104 et les moyens de cryptage 103 sont conçus de telle sorte que le signal acoustique 20 varie à chaque opération. En effet, crypter un code d'identification c'est le transformer en une suite d'informations, incompréhensibles pour tout un chacun, et que, seul le titulaire de la clef de cryptage, pourra décrypter. Mais cela n'empêche absolument pas la copie du code d'identification crypté, soit au cours de sa transmission acoustique (magnétophone), soit par piratage de la ligne téléphonique. Cette copie utilisée indûment par un fraudeur, sera traitée par le système récepteur comme ayant toutes les caractéristiques de l'original, puis interprétée afin de vérifier les identifiants de la carte.

Le problème posé est donc le suivant : comment rendre impossible toute tentative de reproduction ? Il sera ci-après décrit différentes variantes de réalisation du moyen général qui permet de faire la distinction entre l'original et la copie, lors de l'analyse du signal crypté reçu par les moyens informatiques 21, en insérant un élément distinctif dans le signal 20 du type DTMF émis par la carte 10.

L'une des variantes consiste à utiliser une fonction dite d'horodatage (par exemple, ainsi qu'elle a été décrite dans le brevet US n° 4 998 279). Cette fonction d'horodatage exploite le paramètre "temps" qui évolue en permanence. La "copie" se trouve ainsi en retard, quand elle est émise. Une telle solution nécessite une synchronisation entre les moyens d'émission 13 et les moyens informatiques 21. Pour cela tous les deux doivent disposer d'une "base de temps" et d'un "étalon de fréquence". Ces deux bases de temps ont leur précision propre et leur dérive propre. Il en résulte qu'elles se désynchronisent lentement, mais progressivement. Pour remédier à cette difficulté technique, une certaine dérive est tolérée entre les bases de temps des moyens d'émission 13 et des moyens informatiques 21. Plus cette dérive est importante, plus l'incertitude augmente sur la "validité" de l'information reçue et plus augmente le risque de fraude. Ainsi si une dérive de une minute est tolérée, toute copie illicite de l'émission du signal crypté, et réutilisée frauduleusement dans les 30 secondes qui suivent, sera perçue comme valide par le système d'analyse des moyens informatiques 21.

Une autre variante consiste à utiliser des listes incrémentales (par exemple, ainsi qu'elle a été décrite dans le brevet US n° 4 928 098). Le dispositif d'émission et celui de réception possèdent la liste ordonnée des cryptages successifs du code d'identification ou bien disposent des algorithmes permettant de les établir au fur et à mesure. A un instant donné les moyens informatiques 21 sont en attente du résultat crypté C(n). S'ils reçoivent effectivement le message C(n), il valide l'opération. Mais les moyens informatiques 21 peuvent recevoir un message différent, en effet l'utilisateur de la carte peut avoir actionnée plusieurs fois les moyens d'émission 13 de celle-ci, par jeu, par maladresse, de sorte que la carte est dans la situation d'émettre le résultat crypté C(n+p) lors de sa prochaine utilisation avec les moyens informatiques 21. Si les moyens informatiques 21 reçoivent un message différent, ils cherchent en avant, dans la liste de résultats cryptés successifs, s'il existe un message C(n+p) identique à celui reçu. Pour lever l'ambiguïté "est-ce un message authentique émis par l'émetteur ?" ou "est-ce un message frauduleux ?", la solution consiste à demander ou à attendre l'émission suivante. Si celui-ci est alors identique à C(n+p+1), le système valide alors le message et se place dans l'attente de la prochaine émission, dans l'état C(n+p+2). Si celui-ci est différent, le message n'est pas validé et le système d'analyse reste en attente du message C(n). Une telle variante de réalisation n'est pas très ergonomique puisqu'elle oblige le titulaire de la carte à actionner plusieurs fois celle-ci.

Selon une variante de réalisation préférentielle, pour distinguer le signal original de sa copie, le microprocesseur 104 embarqué dans la carte 10 comporte un compteur incrémental 105. A chaque usage de la carte, le compteur incrémental 105 s'incrémente d'une ou de plusieurs unités. Bien évidemment, telle une roue à cliquet, celui-ci ne peut revenir en arrière, il ne peut qu'avancer à chaque usage.

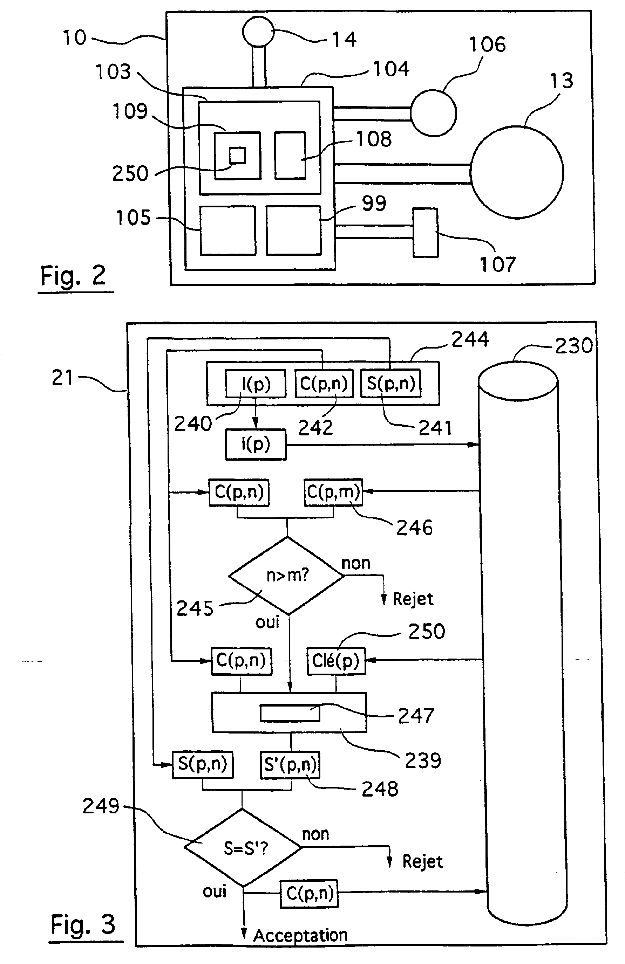

Dans le cas de cette variante de réalisation, l'état C(p,n) 242 du compteur 105 entre dans le calcul du message crypté 244 émis par les moyens d'émission 13. La partie codée S(p,n) 241 est calculée par l'algorithme 108 (dont l'équivalent 247 est mémorisé dans les moyens informatiques 21 au moyen de la clé secrète 250 spécifique à chaque carte et de l'état C(p,n) 242 du compteur 105. La carte 10 émet, en plus du numéro d'identification I(p) 240 de la carte et du code d'identification crypté S(p,n) 241, l'état C(p,n) 242 de son compteur incrémental 105 à chaque émission. Les moyens informatiques 21 mémorisent 230, dans la base de données 23, l'état C(p,n) 242 du compteur incrémental 105 lors de la dernière opération validée. Ainsi, à chaque réception de message 244, les moyens de comparaison 25 des moyens informatiques 21 peuvent comparer 245 l'information reçue relative à l'état C(p,n) 242 du compteur 105, à la précédente information reçue C(p,m) 246 et gardée en mémoire 230, 23.
a) - Si l'état C(p,n) 242 du compteur 105 (fig. 2) exprimé dans le message 244 est strictement supérieur (n > m) à celui C(p,m) 246 précédemment reçu, alors le message 244 est accepté et l'analyse se poursuit.
b)- Si l'état C(p,n) 242 du compteur 105 exprimé dans le message 244 est inférieur ou égal (n ≤ m) à celui C(p,m) 246 précédemment reçu, alors le message est refusé. Le message reçu ne peut être qu'une copie antérieurement effectuée ou un leurre informatique.

Si les conditions définies au point a) ci-dessus sont réunies, les moyens informatiques 21 permettent de lire la partie fixe I(p) 240 et de rechercher dans leur propre base de données 23, 230 la clé secrète correspondante de la carte. Les moyens de calcul 239 des moyens de traitement 24 peuvent alors au moyen l'agorithme 247, de l'état du compteur C(p,n) 242 et de la clé secrète Clé(p) 250, procéder au calcul du code crypté attendu par les moyens informatiques 21. Le code crypté S'(p,n) 248 ainsi calculé est comparé 249 à celui effectivement reçu S(p,n) 241, par les moyens de comparaison 25. Ce procédé et ces moyens permettent donc de valider ou d'invalider le message 244, sans qu'il soit nécessaire à l'utilisateur de la carte d'actionner plusieurs fois celle-ci, comme cela est le cas dans la variante de réalisation ci-dessus décrite.

L'existence au sein de la carte 10 d'un compteur incrémental 105 permet, sans coût supplémentaire, de fixer, au moment de la programmation individuelle de la carte, le nombre maximum de fois où la carte peut être utilisée. Une fois ce maximum atteint, celle-ci n'émet plus de message cohérent et est donc refusée par les moyens informatiques 21.

La trame 244 émise contient, pour une carte donnée (p),
- une partie fixe I(p) 240 (le numéro d'identification de la carte),
- une partie variable incrémentale C(p,n) 242 (l'état du compteur),
- une partie variable S(p,n) 241 apparemment aléatoire (le résultat d'un algorithme de cryptage 108 sur la clé secrète 250 propre à cette carte (p)).

La trame émise :
- est toujours différente d'une carte à l'autre,
- est, pour une carte donnée, toujours différente à chaque émission.

Les moyens informatiques 21 permettent, pour une carte donnée (p), de :
- lire la partie fixe I(p) 240 (le numéro d'identification de la carte),
- rechercher dans leur propre base de données 23 la clé secrète 250 de cette carte et le dernier enregistrement reçu de l'état C(p,m) 246 du compteur 105 de cette carte,
- rejeter cette trame 244 si l'état du compteur C(p,n) 242 de l'opération en cours est inférieur ou égal à celui C(p,m) 246 précédemment reçu et de poursuivre la vérification de l'opération en cours si l'état C(p,n) 242 est strictement supérieur à celui C(p,m) 246 précédemment reçu,
- de "décrypter" le message 244 reçu et d'en valider le contenu, en le recalculant au moyen de l'algorithme de cryptage 247, de la clé spécifique 250 de cette carte et de l'état du compteur C(p,n) 242, puis en comparant le résultat de ce calcul au message reçu.

Ainsi, grâce à cette combinaison de moyens, il est possible d'émettre, au moyen d'une carte ayant le format d'une carte de crédit, des fréquences acoustiques de type DTMF d'identification, recevables par le microphone d'un équipement relié au réseau téléphonique, et d'avoir la certitude de l'authenticité de la carte appelante et d'écarter ainsi tous les fraudeurs utilisant tout enregistrement sonore ou informatique ou tout leurre informatique.

Afin d'augmenter la sécurité du système, dans la variante de réalisation représentée sur la figure 1, les moyens informatiques 21 comprennent en outre des seconds moyens de comparaison 26. Ces moyens de comparaison permettent de comparer un code confidentiel personnel à l'abonné, contenu dans la base de données, avec le code confidentiel émis par l'utilisateur. Ce code est émis au moyen d'un clavier 27 associé au combiné téléphonique 16 et/ou à la carte 10 et transmis aux moyens informatiques 21 de l'opérateur de télécommunication, par le réseau de communication 15.

Ainsi, l'opérateur de télécommunication a l'assurance que l'appelant 11 est bien la personne habilitée à entrer en relation avec ses services. Une carte volée ne peut pas être utilisée par le voleur faute de connaître le code confidentiel.

Dans une autre variante de réalisation, afin également de renforcer la sécurité du système et d'éviter que le client ne puisse contester l'ordre qu'il a donné à l'opérateur de télécommunication, le système selon l'invention est tel que :
- la carte 10 émet, lorsqu'elle est actionnée 14 par l'abonné, un signal acoustique crypté de validation des ordres donnés par l'abonné 11,
- les dits moyens informatiques 21 comprennent des moyens de détection 21a et d'enregistrement 21b du signal de validation.

Grâce à ce système, le client a validé, par une signature électronique, l'ordre qu'il a donné à l'opérateur de télécommunication.

Avantageusement dans ce cas les moyens informatiques 21 comprennent en outre des moyens d'édition 28 d'un accusé de réception 29 des ordres donnés. Cet accusé de réception est adressé à l'abonné 11.

## Revendications

1. Procédé permettant à un opérateur (12) de télécommunication d'identifier de manière rapide et de débiter de manière sûre les abonnés d'un réseau téléphonique,
le dit procédé comprenant les étapes suivantes :
- l'opérateur (12) de télécommunication met à la disposition de chacun des abonnés (11) une carte d'abonné (10), au format carte de crédit, personnalisée par des identifiants spécifiques pour chaque abonné et pour chaque carte d'abonné,
- la dite carte (10), au format carte de crédit, émet de brefs signaux acoustiques d'identification, de type DTMF, cryptés au moins en partie, variant à chaque opération, lorsqu'elle est actionnée par l'abonné (11), notamment au moyen d'un bouton (14),
- les signaux acoustiques d'identification sont reçus par le microphone (17) du combiné téléphonique et sont convertis en signaux électriques, avant d'être transmis par le réseau de communication (15) au service informatique de l'opérateur de télécommunication (12),
- les signaux transmis et les données de l'abonné et de la carte d'abonné détenues par le service informatique (18) de l'opérateur (12) de télécommunication, sont traités (24) et comparés (25) électroniquement par le service informatique (18) de l'opérateur de télécommunication,
et en outre :
- la dite carte (10) :
* décompte (105) en outre le nombre de fois C(p,n) (242) où elle est actionnée (14),
* émet des signaux acoustiques (20) représentatifs du nombre de fois C(p,n) (242) où elle a été actionnée,
* crypte (103) les signaux acoustiques en fonction du nombre de fois C(p,n) (242) où elle a été actionnée,
- les dits moyens informatiques (21), pour traiter (24) et comparer (25) électroniquement les signaux transmis et les données d'identification de l'abonné et de la carte détenues (23) par le service informatique (18) de l'opérateur (12) de télécommunication,
* mémorisent (230) le nombre de fois C(p,m) (246) où la carte a été actionnée lors de dernière opération validée,
* comparent (245) le nombre de fois C(p,n) (242) où la carte a été actionnée, lors de l'opération en cours, avec le nombre de fois mémorisé C(p,m) (246)
* rejettent l'opération en cours si C(p,n) (242) est inférieur ou égal à C(p,m) (246) et poursuivent la vérification de l'opération en cours si C(p,n) (242) est supérieur à C(p,m) (246),
* recalculent (239) les signaux électroniques S' (p,n) (248) en fonction des données d'identification et du nombre de fois C(p,n) (242) où la carte a été actionnée, lors de l'opération en cours, puis les comparent (249) aux signaux électroniques transmis S(p,n) (241),
de sorte qu'en cas de coïncidence, l'abonné peut être immédiatement mis en communication avec les services (30) de l'opérateur (12) de télécommunication.

2. Procédé selon la revendication 1, comprenant en outre l'étape suivante :
- l'abonné émet, au moyen d'un clavier (27) associé au microphone et/ou à la carte, un code confidentiel ; après transmission au service informatique (18) de l'opérateur de télécommunication, par le réseau de communication (15), ce code confidentiel est traité et comparé (26) au code confidentiel personnel du client détenu par le service informatique de l'opérateur de télécommunication.

3. Procédé selon les revendications 1 ou 2, comprenant en outre l'étape suivante :
- les ordres donnés par l'abonné à l'opérateur de télécommunication sont validés par l'abonné en actionnant (14) la carte d'abonné (10) pour qu'elle émette un signal acoustique crypté de validation
- le dit signal de validation est enregistré (21b) par le service informatique de l'opérateur de télécommunication.

4. Procédé selon la revendication 3, comprenant en outre l'étape suivante :
- un accusé de réception (29) du signal de validation est adressé au client.

5. Système permettant à un opérateur de télécommunication (12) d'identifier de manière rapide et de débiter de manière sûre les abonnés (11) d'un réseau téléphonique, le dit système comprenant :
- une carte d'abonné (10), au format carte de crédit, personnalisée par des identifiants spécifiques pour chaque carte d'abonné et pour chaque abonné, mise à la disposition de ceux-ci ; la dite carte comportant :
* des moyens (13) d'émission de brefs signaux acoustiques d'identification, de type DTMF, actionnés par l'abonné au moyen d'un élément (14) accessible de l'extérieur de la carte d'abonné,
* des moyens de cryptage permettant de crypter au moins en partie et de varier les signaux acoustiques chaque fois que la carte (10) est actionnée par l'élément (14).
- un combiné téléphonique comprenant un microphone (17) destiné à recevoir et transformer les signaux acoustiques reçus, en des signaux électroniques transmissibles à distance au moyen du réseau de communication (15),
- des moyens informatiques (21), dépendants des services informatiques (18) de l'opérateur de télécommunication (12), connectés au réseau de télécommunication, les dits moyens informatiques (21) comprenant :
* une base de données (23) contenant les références des cartes d'abonnés et des abonnés et leurs données d'identification,
* des moyens de traitement (24) et des moyens de comparaison (25) des signaux électroniques et des données d'identifcation contenues dans la base de données, de sorte qu'en cas de coïncidence, l'abonné peut être immédiatement mis en communication avec les services (30) de l'opérateur de télécommunication (12),
- la dite carte (10) comportant en outre :
* un compteur incrémental (105) interconnecté aux moyens d'émission (13) et aux moyens de cryptage (103), s'incrémentant d'au moins une unité chaque fois que la carte (10) est actionnée par l'élément (14),
de sorte que l'état du compteur incrémental (105) est émis à destination des moyens informatiques (21) et que les signaux acoustiques sont cryptés en fonction de l'état du compteur incrémental
- les dits moyens informatiques (21) comportant en outre :
* des moyens de mémorisation (23, 230) de l'état C(p,m) (246) du compteur incrémental (105) lors de la dernière opération validée,
* des moyens de comparaison (245) de l'état C(p,n) (242) du compteur incrémental (105) émis lors de l'opération en cours avec l'état C(p,m) (246) du compteur incrémental mémorisé,
de sorte que la vérification de l'opération en cours est rejetée si C(p,n) (242) est inférieur ou égal à C(p,m) (246) et est poursuivie si C(p,n) (242) est strictement supérieur à C(p,m) (246)
- les dits moyens de traitement (24) et les dits moyens de comparaison (25) des signaux électroniques et des données d'identification contenues dans la base de données comportant des moyens permettant de recalculer (239) les signaux électroniques en fonction de l'état C(p,n) (242) du compteur incrémental (105) et des données d'identification puis de les comparer (249) aux signaux électroniques transmis.

6. Système selon la revendication 5, les dits moyens informatiques comprenant en outre:
- des seconds moyens de comparaison (26) d'un code confidentiel personnel de l'abonné contenu dans la base de données, à un code confidentiel émis par le client au moyen d'un clavier (27) associé au combiné téléphonique et/ou à la carte et transmis aux moyens informatiques de l'opérateur de télécommunication, par le réseau de communication.

7. Système selon les revendications 5 ou 6,
la dite carte émettant en outre, lorsqu'elle est actionnée (14) par l'abonné, un signal acoustique crypté de validation des ordres donnés par l'abonné,
les dits moyens informatiques comprenant en outre :
- des moyens de détection (21a) et d'enregistrement (21b) du signal de validation

8. Système selon la revendication 7, les dits moyens informatiques (21) comprenant en outre :
- des moyens d'édition (28) d'un accusé de réception (29) des ordres donnés, destiné à être adressé à l'abonné.

## Claims

1. Method enabling a telecommunications operator (12) to quickly identify and reliably debit subscribers to a telephone network, the said method comprising the following steps:
- the telecommunications operator (12) provides each of his subscribers (11) with a subscriber card (10), the same size as a credit card, customized by identifiers specific to each subscriber and to each subscriber card,
- the said card (10), the same size as a credit card, emits short acoustic identification signals, of DTMF type, at least partly encrypted and varying for each operation, when the subscriber (11) uses it, particularly by pressing a button (14),
- acoustic identification signals are received by the microphone (17) in the telephone handset and are converted into electrical signals before being transmitted through the communications network (15) to the computer service of the telecommunications operator (12),
- the transmitted signals and the subscriber and subscriber card identification data stored by the computer service (18) of the telecommunications operator (12) are methoded (24) and electronically compared (25) by the telecommunications operator's computer service (18),
and moreover:
- the said card (10):
* also counts (105) the number of times C(p,n) (242) that it has been used,
* emits acoustic signals (20) representing the number of times C(p,n) that it has been used,
* encrypts (103) acoustic signals as a function of the number of times C(p,n) (242) that it has been used.
- the said computer means (21) for methoding (24) and electronically comparing (25) the transmitted signals and the subscriber and card identification data held (23) by the computer service (18) of the telecommunications operator (12),
* store (230) the number of times C(p,m) (246) that the card has been used at the time of the last validated operation,
* compare (245) the number of times C(p,n) (242) that the card has been used at the time of the current operation, with the memorized number of times C(p,m) (246),
* refuse the current operation if C(p,n) (242) is less than or equal to C(p,m) (246) and continue verifying the current operation if C(p,n) (242) is greater than C(p,m) (246),
* recalculate (239) the electronic signals S'(p,n) (248) as a function of identification data and the number of times C(p,n) (242) that the card was used, during the current operation, and then compare them (249) with the transmitted electronic signals S(p,n) (241),
so that if the values agree, the subscriber may then immediately be connected to the services (30) of the telecommunications operator (12).

2. Method according to claim 1, also comprising the following Step:
- the subscriber uses a keypad (27) associated with the microphone and/or the card to send a pin code; after transmission to the telecommunications operator's computer service (18) through the communications network (15), this pin code is methoded and compared (26) with the customer's pin code held by the telecommunications operator's computer service.

3. Method according to claim 1 or 2, also comprising the following steps:
- orders given by the subscriber to the telecommunications operator are validated by the subscriber by activating (14) the subscriber card (10) so that it emits an encrypted acoustic validation signal,
- the telecommunications operator's computer service records (21b) the said validation signal.

4. Method according to claim 3, also comprising the following step:
- an acknowledgment (29) of the validation signal is addressed to the customer.

5. System by which a telecommunications operator (12) can quickly identify and reliably debit subscribers (11) to a telephone network, the said system comprising:
- a subscriber card (10), the same size as a credit card, customized by identifiers different for each subscriber card and for each subscriber, and provided to subscribers; the said card comprising:
* means (13) of emitting short acoustic identification signals, of DTMF type, activated by the subscriber using an element (14) accessible from the outside of the subscriber card,
* encryption means used to at least partly encrypt and vary acoustic signals each time the card (10) is activated by the element (14),
- a telephone handset comprising a microphone (17) that will receive the acoustic signals and transform them into electronic signals that can be transmitted to the remote site through the communications network (15),
- computer means (21) dependent on the computer services (18) belonging to the telecommunications operator (12), connected to the telecommunications network, the said computer means (21) comprising:
* a database (23) containing the references of subscriber cards and subscribers and their identification data,
* methoding means (24) and comparison means (25) operating on electronic signals and identification data contained in the database, such that if agreement is found, the subscriber can immediately be connected with the services (30) of the telecommunications operator (12),
- the said card (10) also comprising:
* an incremental counter (105) interconnected to emission means (13) and encryption means (103) that is incremented by at least one unit every time that the card (10) is activated by element (14),
such that the state of the incremental counter (105) is sent to the computer means (21) and acoustic signals are encrypted as a function of the state of the incremental counter.
- The said computer means (21) also comprising:
* means of memorizing (23, 230) the state C(p,m) (246) of the incremental counter (105) at the time of the last validated operation,
* means for comparing (245) the state C(p,n) (242) of the incremental counter (105) emitted during the current operation with the state C(p,m) (246) of the memorized incremental counter,
such that the check on the current operation is refused if C(p,n) (242) is less than or equal to C(p,m) (246) and is accepted if C(p,n) (242) is greater than C(p,m) (246)
- the said methoding means (24) and the said means of comparison (25) of the electronic signals and identification data contained in the database including means of recalculating (239) the electronic signals as a function of the state C(p,n) (242) of the incremental counter (105) and the identification data, and then comparing (249) them with the transmitted electronic signals.

6. System according to claim 5, the said computer means also comprising:
- second means of comparison (26) to compare a subscriber pin code contained in the database, with a pin code emitted by the customer using a keypad (27) associated with the telephone handset and/or the card and transmitted to the telecommunications operator's computer means through the communications network.

7. System according to claim 5 or 6,
the said card also emitting an encrypted acoustic signal validating the orders given by the subscriber, when activated (14) by the subscriber, the said computer means also comprising:
- means of detecting (21a) and recording (21b) the validation signal.

8. System according to claim 7, the said computer means (21) also comprising:
- means of printing (28) an acknowledgment (29) of the orders given, which will be addressed to the subscriber.

## Patentansprüche

1. Verfahren, das es einem Fernmeldenetzbetreiber (12) ermöglicht, die Abonnenten eines Telefonnetzes schnell zu identifizieren und sicher die für die Abonnenten ausgeführten Dienstleistungen zu berechnen,
**dadurch gekennzeichnet, dass** das genannte Verfahren folgende Schritte umfasst:
- der Fernmeldenetzbetreiber (12) stellt jedem einzelnen Abonnenten (11) eine Abonnementkarte (10) im Kreditkartenformat zur Verfügung, die für jeden Abonnenten und für jede Karte personalisierte Daten in Form von Identifizierungsmerkmalen enthält,
- die genannte Karte (10) im Kreditkartenformat sendet, wenn sie vom Abonnenten (11) mittels eines Knopfes (14) aktiviert wird, kurze akustische Identifikationssignale vom Typ DTMF aus, die wenigstens teilweise verschlüsselt und bei jeder Operation unterschiedlich sind,
- die akustischen Identifikationssignale werden vom Mikrophon (17) des Telefonapparates empfangen und in elektronische Signale umgewandelt, bevor sie durch das Kommunikationsnetz (15) der Informatikabteilung des Fernmeldenetzbetreibers (12) zugeleitet werden,
- die übermittelten Signale und die Daten des Abonnenten der Abonnementkarte, die bei der Informatikabteilung (18) des Fernmeldenetzbetreibers (12) vorliegen, werden von der Informatikabteilung (18) des Fernmeldenetzbetreibers elektronisch verarbeitet (24) und verglichen (25), und ferner:
- dass die genannte Karte(10):
* außerdem die Anzahl Male C(p,n) (242), die sie aktiviert (14) wurde, abwärts zählt (105),
* akustische Signale (20) aussendet, die für die Anzahl Male C(p,n) (242), die sie aktiviert wurde, repräsentativ sind,
* die akustischen Signale entsprechend der Anzahl Male C(p,n) (242), die sie aktiviert wurde, verschlüsselt (103),
- dass die genannten Informatikmittel (21) zur elektronischen Verarbeitung (24) und zum elektronischen Vergleich (25) der übermittelten Signale und der Identifkationsdaten des Abonnenten und der Karte, die bei der Informatikabteilung (18) des Fernmeldenetzbetreibers (12) vorliegen (23),
* die Anzahl Male C(p,m) (246), die die Karte während der letzten validierten Operation aktiviert wurde, speichern (230),
* die Anzahl Male C(p,n) (242), die die Karte während der laufenden Operation aktiviert wurde, mit der gespeicherten Anzahl Male C(p,m) (246) vergleichen (245),
* die laufende Operation zurückweisen, wenn C(p,n) (242) kleiner als oder gleich C(p,m) (246) ist und die Überprüfung der laufenden Operation fortsetzen, wenn C(p,n) (242) größer ist als C(p,m) (246),
* die elektronischen Signale S'(p,n) (248) entsprechend den Identifikationsdaten und der Anzahl Male C(p,n) (242), die die Karte während der laufenden Operation aktiviert wurde, neu berechnen (239) und sie anschließend mit den übermittelten elektronischen Signalen S(p,n) (241) vergleichen (249),
so dass der Abonnent bei Übereinstimmung sofort mit den Abteilungen (30) des Fernmeldenetzbetreibers (12) verbunden werden kann.

2. Verfahren nach Anspruch 1, **dadurch gekennzeichnet, dass** es ferner folgenden Schritt umfasst:
- der Abonnent sendet mittels einer dem Mikrophon und/oder der Karte zugeordneten Tastatur (27) einen Geheimcode aus; nach Übermittlung an die Informatikabteilung (18) des Fernmeldenetzbetreibers über das Kommunikationsnetz (15) wird dieser Geheimcode verarbeitet und mit dem persönlichen Geheimcode des Kunden, der bei der Informatikabteilung des Fernmeldenetzbetreibers vorliegt, verglichen (26).

3. Verfahren nach den Ansprüchen 1 oder 2, **dadurch gekennzeichnet, dass** es ferner folgenden Schritt umfasst:
- die dem Fernmeldenetzbetreiber vom Abonnenten erteilten Aufträge werden vom Abonnenten durch Aktivierung (14) der Abonnementkarte (10) validiert, damit diese ein verschlüsseltes, akustisches Validierungssignal aussendet.
- das genannte Validierungssignal wird von der Informatikabteilung des Fernmeldenetzbetreibers aufgezeichnet (21 b).

4. Verfahren nach Anspruch 3, **dadurch gekennzeichnet, dass** es ferner folgenden Schritt umfasst:
- eine Empfangsbestätigung (29) des Validierungssignals wird an den Kunden gesendet.

5. System, das es einem Fernmeldenetzbetrelber (12) ermöglicht, die Abonnenten (11) eines Telefonnetzes auf schnelle Weise zu identifizieren und auf sichere Weise die für den Abonnenten (11) ausgeführten Dienstleistungen zu berechnen, **dadurch gekennzeichnet, dass** das genannte System Folgendes umfasst:
- eine Abonnementkarte (10) im Kreditkartenformat, die für jede Abonnementkarte und für jeden Abonnenten personalisierte Daten in Form von Identifizierungsmerkmalen enthält und die jedem Abonnenten zur Verfügung gestellt wird, wobei die genannte Karte Folgendes aufweist:
* Sendemittel (13) zur Aussendung kurzer akustischer Identifikationssignale vom Typ DTMF, aktiviert durch den Abonnenten mittels eines von außerhalb der Abonnementkarte zugänglichen Elements (14),
* Verschlüsselungsmittel zur mindestens teilweisen Verschlüsselung und Veränderung der akustischen Signale, sobald die Karte (10) durch das Element (14) aktiviert wird.
- einen Telefonapparat mit Mikrophon (17) zum Empfang und zur Limwandlung der empfangenen akustischen Signale in elektronische Signale, die über das Kommunikationsnetz (15) fernübertragbar sind,
- Informatikmittel (21), die den Informatikabteilungen (18) des Fernmeldenetzbetreibers (12) zugeordnet und mit dem Fernmeldenetz verbunden sind, wobei die genannten Informatikmittel (21) Folgendes aufweisen:
* eine Datenbank (23), enthaltend die Referenzdaten der Abonnementkarte, der Abonnenten und deren Identifikationsdaten,
* Mittel zur Verarbeitung (24) und Mittel zum Vergleich (25) der elektronischen Signale und der in der Datenbank enthaltenen Identifikationsdaten,
so dass der Abonnent bei Übereinstimmung sofort mit den Abteilungen (30) des Fernmeldenetzbetreibers (12) verbunden werden kann,
- dass die genannte Karte (10) ferner umfasst:
* einen Inkrementalzähler (105), der mit den Sendemittein (13) und dem Verschlüsselungsmitteln (103) zusammengeschaltet ist und der bei jeder Aktivierung der Karte (10) durch das Element (14) jeweils um mindestens eine Einheit weiterzählt,
so dass der Zustand des Inkrementalzählers (105) an die Informatikmittel (21) gesendet wird und die akustischen Signale je nach Zustand des Inkrementalzählers verschlüsselt werden,
- dass die genannten Informatikmittel (21) ferner umfassen:
* Mittel zur Speicherung (23, 230) des Zustands C(p,m) (246) des Inkrementalzählers (105) während der letzten validierten Operation,
* Mittel zum Vergleich (245) des Zustands C(p,n) (242) des Inkrementalzählers (105), der während der laufenden Operation ausgesendet wird, mit dem gespeicherten Zustand C(p,m) (246) des Inkrementalzählers,
so dass die Überprüfung der laufenden Operation zurückgewiesen wird, wenn C(p,n) (242) kleiner als oder gleich C(p,m) (246) ist und fortgesetzt wird, wenn C(p,n) (242) jedenfalls größer ist als C(p,m) (246),
- dass die genannten Mittel zur Verarbeitung (24) und die genannten Mittel zum Vergleich (25) der elektronischen Signale und der in der Datenbank enthaltenen Identifikationsdaten Mittel aufweisen, die eine Neuberechnung (239) der elektronischen Signale je nach Zustand C(p,n) (242) des Inkrementalzählers (105) und der Identifikationsdaten und den anschließenden Vergleich (249) mit den übermittelten elektronischen Signalen erlauben.

6. System nach Anspruch 5, **dadurch gekennzeichnet, dass** die genannten Informatikmittel ferner folgendes umfassen:
- zweite Mittel zum Vergleich (26) eines in der Datenbank enthaltenen personenbezogenen Abonnenten-Geheimcodes mit einem Geheimcode, der vom Kunden mittels einer dem Telefonapparat und/oder der Karte zugeordneten Tastatur (27) gesendet und an die Informatikmittel des Fernmeldenetzbetreibers Ober das Kommunikationsnetz übermittelt wird.

7. System nach den Ansprüchen 5 oder 6, **dadurch gekennzeichnet,**
**dass** die genannte Karte bei Aktivierung (14) durch den Abonnenten ferner ein verschlüsseltes, akustisches Validierungssignal der vom Abonnenten erteilten Aufträge aussendet,
**dass** die genannten Informatikmittel ferner enthalten:
- Mittel zur Erfassung (21a) und Aufzeichnung (21b) des Validierungssignals.

8. System nach Anspruch 7, **dadurch gekennzeichnet, dass** die genannten Informatikmittel (21) ferner Folgendes aufweisen:
- Mittel zur Ausgabe (28) einer Empfangsbestätigung (29) der erteilten Aufträge, die dem Kunden zugesandt wird.
